(19)

Europäisches Patentamt

European Patent Office

Office européen des brevets

(11) **EP 4 503 758 A1**

(12) **EUROPEAN PATENT APPLICATION**
published in accordance with Art. 153(4) EPC

(43) Date of publication:
**05.02.2025 Bulletin 2025/06**

(21) Application number: **22932688.9**

(22) Date of filing: **24.03.2022**

(51) International Patent Classification (IPC):
**H04W 52/02** *(2009.01)*

(52) Cooperative Patent Classification (CPC):
**H04W 52/02**

(86) International application number:
**PCT/CN2022/082876**

(87) International publication number:
**WO 2023/178623 (28.09.2023 Gazette 2023/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **FU, Ting**
**Beijing 100085 (CN)**

(74) Representative: **Dehns Germany Partnerschaft
mbB**
**Theresienstraße 6-8**
**80333 München (DE)**

(54) **METHOD AND DEVICE FOR MONITORING WAKE-UP SIGNAL AND READABLE STORAGE MEDIUM**

(57)     The present disclosure provides a method and device for transmitting a wake-up signal and a readable storage medium, which are applied to the technical field of wireless communications. The method comprises: monitoring a wake-up signal (WUS) opportunity corresponding to the user equipment, wherein each WUS opportunity comprises a plurality of WUS monitoring opportunities, and each WUS monitoring opportunity corresponds to one SSB beam. In the present disclosure, in a multi-beam coverage network, each WUS monitoring opportunity corresponds to one SSB beam, such that the user equipment can accurately monitor the monitoring opportunity of the wake-up signal.

| network device 101 | user device 102 |
|---|---|
| S201, determining a WUS occasion corresponding to the user device 102, each WUS occasion includes a plurality of WUS monitoring occasions, and each WUS monitoring occasion corresponds to one SSB beam | S201, determining a WUS occasion corresponding to the user device 102, each WUS occasion includes a plurality of WUS monitoring occasions, and each WUS monitoring occasion corresponds to one SSB beam |

S202, sending a wake up signal to the user device 102 at the WUS occasion

S203, monitoring the wake up signal WUS occasion corresponding to the user device

FIG. 2

**Description**

**TECHNICAL FIELD**

The present disclosure relates to a field of wireless communication technology, and more particularly, to a method, an apparatus, and a readable storage medium for monitoring a wake up signal.

**BACKGROUND**

In some wireless communication technologies, a low power (LP) wake up signal (WUS) may be applied. When the wake up signal WUS is applied, a separate receiver corresponding to the wake up signal WUS may be referred to as a secondary transceiver. A user equipment (UE) uses a main transceiver to process uplink and downlink data, and uses the separate receiver to receive the wake up signal WUS. For example, when the main transceiver of the user device is in a dormant state, after the separate receiver corresponding to the WUS receives the WUS, the main transceiver is turned on to be in a working state; when the main transceiver of the user device is in the dormant state, the separate receiver corresponding to the WUS does not receive the WUS, or the separate receiver corresponding to the WUS receives the WUS but the WUS indicates not to wake up the main transceiver and continue to maintain the dormant state of the main transceiver.

Under a network deployed with multi-beam coverage, how does the UE determine a monitoring occasion of the wake up signal corresponding to the UE.

**SUMMARY**

The present disclosure provides a method, an apparatus, and a readable storage medium for monitoring a wake up signal.

In a first aspect, a method for monitoring a wake up signal is provided and the method is performed by a user device and includes:

monitoring a wake up signal WUS occasion corresponding to the user device, where each WUS occasion includes a plurality of WUS monitoring occasions, and each WUS monitoring occasion corresponds to one SSB beam.

In the method, under a multi-beam coverage network, each WUS monitoring occasion corresponds to one SSB beam, such that the user device may accurately monitor a monitoring occasion of the wake up signal.

In some possible embodiments, each WUS occasion includes WUS monitoring occasions with a number being a product of M and N, M is a number of SSB beams performing data transmission, N is an integer greater than or equal to 1, and each SSB beam corresponds to N WUS monitoring occasions.

In some possible embodiments, the method further includes:

determining, according to an identification of the user device and a wake up signal WUS cycle, the WUS occasion corresponding to the user device.

In some possible embodiments, the WUS monitoring occasion includes at least one time-domain symbol, and a number of time-domain symbols included in each WUS monitoring occasion in a same WUS occasion is identical.

In some possible embodiments, the method further includes:

determining, based on a protocol agreement, a number of time-domain symbols included in the WUS monitoring occasion, or

receiving first configuration information sent by a network device, where the first configuration information is configured to indicate a number of time-domain symbols included in the WUS monitoring occasion.

In some possible embodiments, the method further includes:

determining, based on a protocol agreement, a time-domain position of each WUS monitoring occasion in the WUS occasion, or

receiving second configuration information sent by a network device, where the second configuration information is configured to indicate a time-domain position of the WUS monitoring occasion in the WUS occasion.

In some possible embodiments, the method further includes:

receiving third configuration information from a network device, where the third configuration information is configured to configure an uplink resource;

updating, in response to any symbol in the WUS monitoring occasion overlapping with an uplink symbol in the uplink resource, a start time-domain position of the WUS monitoring occasion to a start position of a downlink symbol closest after the uplink symbol.

In some possible embodiments, the method further includes:

receiving fourth configuration information from a network device, where the fourth configuration information is configured to configure a downlink resource, and the downlink resource is a synchronization signal, a SSB, or a CORESETO;

updating, in response to at least one resource unit RE occupied by the WUS monitoring occasion overlapping with the downlink resource, a start time-domain position of the WUS monitoring occasion to a start position of a downlink symbol closest after the downlink resource.

In some possible embodiments, WUS signals corresponding to the plurality of WUS monitoring occasions in the WUS occasion are identical.

In some possible embodiments, WUS signals corresponding to the plurality of WUS monitoring occasions in the WUS occasion carry indexes of the SSB beams corresponding to the WUS monitoring occasions, respectively.

In a second aspect, a method for sending a wake up signal is provided, the method is performed a network device and includes:

determining a wake up signal WUS occasion corresponding to a user device, where each WUS occasion includes a plurality of WUS monitoring occasions, and each WUS monitoring occasion corresponds to one SSB beam; and sending a wake up signal WUS to the user device at the WUS occasion.

In the method, under a multi-beam coverage network, each WUS monitoring occasion corresponds to one SSB beam, such that the user device may accurately monitor a monitoring occasion of the wake up signal.

In some possible embodiments, each WUS occasion includes WUS monitoring occasions with a number being a product of M and N, M is a number of SSB beams performing data transmission, N is an integer greater than or equal to 1, and each SSB beam corresponds to N WUS monitoring occasions.

In some possible embodiments, determining, according to an identification of the user device and a wake up signal WUS cycle, the WUS occasion corresponding to the user device.

In some possible embodiments, the WUS monitoring occasion includes at least one time-domain symbol, and a number of time-domain symbols included in each WUS monitoring occasion in a same WUS occasion is identical.

In some possible embodiments, determining, based on a protocol agreement, a number of time-domain symbols included in the WUS monitoring occasion, or

sending first configuration information to the user device, where the first configuration information is configured to indicate a number of time-domain symbols included in the WUS monitoring occasion.

In some possible embodiments, determining, based on a protocol agreement, a time-domain position of each WUS monitoring occasion in the WUS occasion, or

sending second configuration information to the user device, where the second configuration information is configured to indicate a time-domain position of the WUS monitoring occasion in the WUS occasion.

In some possible embodiments, sending third configuration information to the user device, where the third configuration information is configured to configure an uplink resource; and

updating, in response to any symbol in the WUS monitoring occasion overlapping with an uplink symbol in the uplink resource, a start time-domain position of the WUS monitoring occasion to a start position of a downlink symbol closest after the uplink symbol.

In some possible embodiments, sending fourth configuration information to the user device, where the fourth configuration information is configured to configure a downlink resource, and the downlink resource is a synchronization signal, a SSB, or a CORESETO; and

updating, in response to at least one resource unit RE occupied by the WUS monitoring occasion overlapping with the downlink resource, a start time-domain position of the WUS monitoring occasion to a start position of a downlink symbol closest after the downlink resource.

In some possible embodiments, WUS signals corresponding to the plurality of WUS monitoring occasions in the WUS occasion are identical.

In some possible embodiments, WUS signals corresponding to the plurality of WUS monitoring occasions in the WUS occasion carry indexes of the SSB beams corresponding to the WUS monitoring occasions, respectively.

In a third aspect, a communication apparatus is provided, and the communication apparatus is used to performs steps performed by the user device according to the first aspect described above or according to any possible design of the first aspect. The user device may implement the above various functions in each of the above methods in the form of a hardware structure, a software module, or both the hardware structure and the software module.

When the method according to the first aspect is implemented through the software module, the communication apparatus may include a transceiver module.

When performing the steps according to the first aspect, the transceiver module is configured to monitor a wake up signal WUS occasion corresponding to the user device, where each WUS occasion includes a plurality of WUS monitoring occasions, and each WUS monitoring occasion corresponds to one SSB beam.

In a fourth aspect, a communication apparatus is provided, and the communication apparatus is used to performs steps performed by the network device according to the first aspect described above or according to any possible design of the first aspect. The user device may implement the above various functions in each of the above methods in the form of a hardware structure, a software module, or both the hardware structure and the software module.

When the method according to the second aspect is implemented through the software module, the communication apparatus may include a processing module and a transceiver module.

When performing the steps according to the second aspect, the processing module is configured to determine a wake up signal WUS occasion corresponding to a user device, where each WUS occasion includes a plurality of WUS monitoring occasions, and each WUS monitoring occasion corresponds to one SSB beam;

the transceiver module is configured to send the wake up signal WUS to the user device at the WUS occasion.

In a fifth aspect, a communication apparatus is provided and includes a processor and a memory, where the memory is configured to store a computer program; and the processor is configured to execute the computer program to implement the first aspect or any possible design of the first aspect.

In a sixth aspect, a communication apparatus is provided and includes a processor and a memory, the memory is configured to store a computer program; and the processor is configured to execute the computer program to implement the first aspect or any possible design of the first aspect.

In a seventh aspect, a computer-readable storage medium is provided, the computer-readable storage medium stores instructions (or referred to as computer program, program), where when the instructions are invoked and executed on a computer, the computer is enabled to perform the first aspect or any possible design of the first aspect.

In an eighth aspect, a computer-readable storage medium is provided, the computer-readable storage medium stores instructions (or referred to as computer program, program), where when the instructions are invoked and executed on a computer, the computer is enabled to perform the first aspect or any possible design of the first aspect.

It should be understood that the above general description and the following detailed description are only exemplary and illustrative and do not limit the present disclosure.

## BRIEF DESCRIPTION OF THE DRAWINGS

The accompanying drawings described herein are used to provide a further understanding of embodiments of the present disclosure and constitute a part of the present disclosure. The embodiments of the present disclosure and their descriptions are used to explain the embodiments of the present disclosure and do not constitute improper limitations to the embodiments of the present disclosure. In the accompanying drawings:

FIG. 1 is a schematic diagram of a wireless communication system architecture provided in embodiments of the present disclosure;

FIG. 2 is a flowchart of a method for transmitting a wake up signal according to an exemplary embodiment;

FIG. 3 is a flowchart of a method for monitoring a wake up signal according to an exemplary embodiment;

FIG. 4 is a flowchart of a method for monitoring a wake up signal according to an exemplary embodiment;

FIG. 5 is a flowchart of a method for monitoring a wake up signal according to an exemplary embodiment;

FIG. 6 is a flowchart of a method for monitoring a wake up signal according to an exemplary embodiment;

FIG. 7 is a flowchart of a method for monitoring a wake up signal according to an exemplary embodiment;

FIG. 8 is a flowchart of a method for monitoring a wake up signal according to an exemplary embodiment;

FIG. 9 is a flowchart of a method for sending a wake up signal according to an exemplary embodiment;

FIG. 10 is a flowchart of a method for sending a wake up signal according to an exemplary embodiment;

FIG. 11 is a flowchart of a method for sending a wake up signal according to an exemplary embodiment;

FIG. 12 is a flowchart of a method for sending a wake up signal according to an exemplary embodiment;

FIG. 13 is a flowchart of a method for sending a wake up signal according to an exemplary embodiment;

FIG. 14 is a flowchart of a method for sending a wake up signal according to an exemplary embodiment;

FIG. 15 is a structural diagram of an apparatus for monitoring a wake up signal according to an exemplary embodiment;

FIG. 16 is a structural diagram of an apparatus for monitoring a wake up signal according to an exemplary embodiment;

FIG. 17 is a structural diagram of an apparatus for sending a wake up signal according to an exemplary embodiment;

FIG. 18 is a structural diagram of an apparatus for sending a wake up signal according to an exemplary embodiment.

DETAILED DESCRIPTION

The embodiments of the present disclosure are further described with reference to the accompanying drawings and the detailed description.

The exemplary embodiments are described in detail here, examples of which are illustrated in the accompanying drawings. When the following description involves the accompanying drawings, unless otherwise indicated, the same numbers in different drawings represent the same or similar elements. The exemplary embodiments described in the following embodiments do not represent all embodiments consistent with the embodiments of the present disclosure. On the contrary, they are merely examples of apparatus and methods consistent with some aspects of the present disclosure as detailed in the appended claims.

The terms used in the present disclosure are for the purpose of describing particular examples only, and are not intended to limit the present disclosure. Terms determined by "a," "the" and "said" in their singular forms in the present disclosure and the appended claims are also intended to include plurality or multiple, unless clearly indicated otherwise in the context. It should also be understood that the term "and/or" as used herein is and includes any and all possible combinations of one or more of the associated listed items.

It should be understood that, although terms "first," "second," "third" and the like may be used in the present disclosure to describe various information, such information should not be limited to these terms. These terms are only used to distinguish one category of information from another. For example, without departing from the scope of the present disclosure, first information may be referred as second information; and similarly, second information may also be referred as first information. Depending on the context, the word "if" and "whether" as used herein may be interpreted as "when" or "upon" or "in response to determining".

The embodiments of the present disclosure are described in detail below. Examples of the embodiments are illustrated in the accompanying drawings where the same or similar numbers throughout indicate the same or similar elements. The embodiments described below by reference to the accompanying drawings are illustrative and are intended to interpret the present disclosure and are not to be construed as a limitation of the present disclosure.

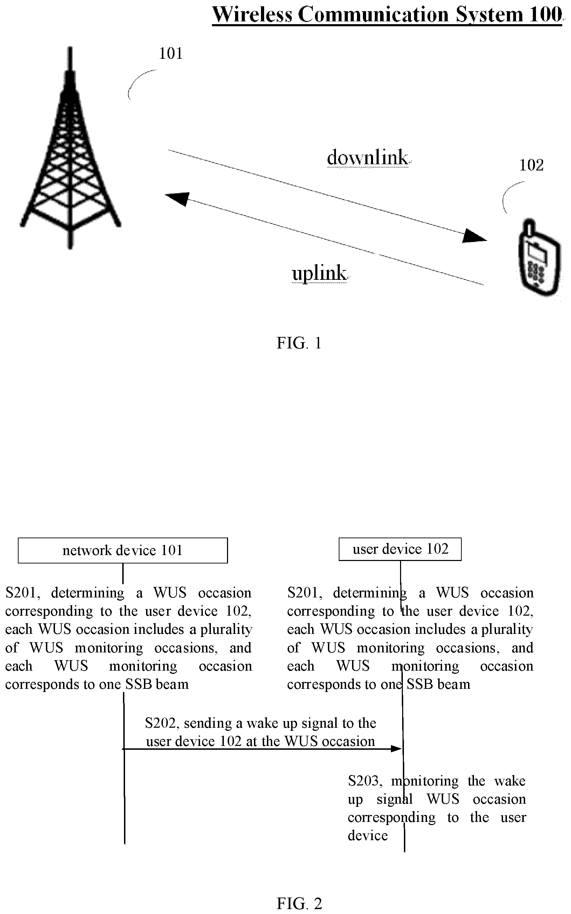

As shown in FIG. 1, a method for monitoring a wake up signal provided by embodiments of the present disclosure may be applied to a wireless communication system 100, which may include, but is not limited to, a network device 101 and a user device 102. The user device 102 is configured to support carrier aggregation, and the user device 102 may be connected to a plurality of carrier units of the network device 101, the plurality of carrier units including one primary carrier unit and one or more secondary carrier units.

It should be understood that the wireless communication system 100 may be applicable to both low frequency and high frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for microwave access (WiMAX) communication system, a cloud radio access network (CRAN) system, a future 5th-generation (5G) system, a new radio (NR) communication system or a future evolution public land mobile network (PLMN) system, etc.

The user device 102 shown above may be user equipment (UE), a terminal, an access terminal, a terminal unit, a terminal station, a mobile station (MS), a remote station, a remote terminal, a mobile terminal, a wireless communication device, a terminal agent or a user device. The user device 102 may has a wireless transceiver function, and is capable of communicating (e.g., wirelessly communicating) with one or more network devices 101 of one or more communication systems, and accepting network service(s) provided by the network device(s) 101 including but not limited to the illustrated base station.

The user device 102 may be a cellular phone, a cordless phone, a session initiation protocol (SIP) phone, a wireless local loop (WLL) station, a personal digital assistant (PDA) device, a handheld device with a wireless communication capability, a computing device or other processing device connected to a wireless modem, an in-vehicle device, a wearable device, a user device in a future 5G network or a user device in a future evolution PLMN network.

The network device 101 may be an access network device (or referred to as an access network site). The access network device refers to a device providing a network access function, such as a radio access network (RAN) base station. The network device may specifically include a base station (BS) device, or include the base station device and a radio resource management device configured to control the base station device. The network device may further include a relay station (a relay device), an access point, and a base station in the future 5G network, a base station in the future evolution PLMN network, or an NR base station. The network device may be a wearable device or an in-vehicle device. The network device may also be a communication chip with a communication module.

For example, the network device 101 includes, but is not limited to, a next-generation base station (gnodeB, gNB) in 5G, an evolved node B (eNB) in the LTE system, a radio network controller (RNC), a node B (NB) in a wideband code division multiple access (WCDMA) system, a radio controller under the CRAN system, a base station controller (BSC), a base transceiver station (BTS) in a global system for mobile communications (GSM) or code division multiple access (CDMA) system, a home base station (for example, a home evolved nodeB, or a home node B (HNB)), a baseband unit (BBU), a transmitting and receiving point (TRP), a transmitting point (TP) or a mobile switching center.

Embodiments of the present disclosure provide a method for monitoring a wake up signal. FIG. 2 is a flowchart of a method for monitoring a wake up signal according to an exemplary embodiment, as shown in FIG. 2. The method includes:

in step S201, a user device 102 and a network device 101 determine a WUS occasion corresponding to the user device 102, each WUS occasion includes a plurality of WUS monitoring occasions, and each WUS monitoring occasion corresponds to one SSB beam.

In an embodiment, the WUS occasion corresponding to the user device 102 is determined according to an identification of the user device 102 a WUS cycle of the wake up signal.

In step S202, the network device 101 sends a wake up signal to the user device 102 at the WUS occasion.

In step S203, the user device 102 monitors the wake up signal WUS occasion corresponding to the user device.

In some possible embodiments, each WUS occasion includes WUS monitoring occasions with a number being a product of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, a number of time-domain symbols included in the WUS monitoring occasion is determined based on a protocol agreement.

In some possible embodiments, a time-domain position of each WUS monitoring occasion in the WUS occasion is determined based on a protocol agreement.

In some possible embodiments, the WUS signals corresponding to the plurality of WUS monitoring occasions in the WUS occasion are identical.

In some possible embodiments, the WUS signals corresponding to the plurality of WUS monitoring occasions in the WUS occasion carry indexes of the SSB beams corresponding to the WUS monitoring occasions, respectively, such that the UE may distinguish a beam corresponding to the wake up signal through the wake up signal, and the WUS signal and PSS/SSS may be combined to support the WUS receiver to achieve a synchronization function.

In the embodiments of the present disclosure, under a multi-beam coverage network, each WUS monitoring occasion corresponds to one SSB beam, such that the user device may accurately monitor a monitoring occasion of the wake up signal.

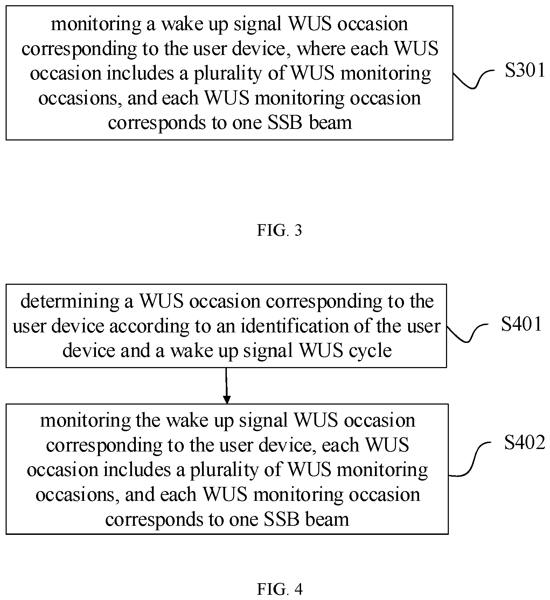

The embodiments of the present disclosure provide a method for monitoring a wake up signal, performed by a user device, and the method may be performed independently or in combination with any other embodiment of the embodiments of the present disclosure. FIG. 3 is a flowchart of monitoring a wake up signal according to an exemplary embodiment. As shown in FIG. 3, the method includes:

in step S301: a wake up signal WUS occasion corresponding to the user device is monitored, where each WUS occasion includes a plurality of WUS monitoring occasions, and each WUS monitoring occasion corresponds to one SSB beam.

In some possible embodiments, each WUS occasion includes WUS monitoring occasions with a number being a product of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, the WUS signals corresponding to the plurality of WUS monitoring occasions in the WUS occasion are identical.

In some possible embodiments, the WUS signals corresponding to the plurality of WUS monitoring occasions in the WUS occasion carry indexes of the SSB beams corresponding to the WUS monitoring occasions, respectively. Thus, the UE may distinguish a beam corresponding to the wake up signal through the wake up signal, and the WUS signal and PSS/SSS may be combined to support the WUS receiver to achieve a synchronization function.

In the embodiments of the present disclosure, the user device monitors a corresponding wake up signal WUS occasion, where each WUS occasion includes a plurality of WUS monitoring occasions, and each WUS monitoring occasion corresponds to one SSB beam. In this multi-beam coverage network, the user device may accurately determine the monitoring occasion of the wake up signal, so as to save energy consumption of the user device.

The embodiments of the present disclosure provide a method for monitoring a wake up signal, performed by a user device, and the method may be performed independently or in combination with any other embodiment of the embodiments of the present disclosure. FIG. 4 is a flowchart of monitoring a wake up signal according to an exemplary embodiment. As shown in FIG. 4, the method includes:

in step S401: a WUS occasion corresponding to the user device is determined according to an identification of the user device and a wake up signal WUS cycle;

in step S402, the wake up signal WUS occasion corresponding to the user device is monitored, each WUS occasion includes a plurality of WUS monitoring occasions, and each WUS monitoring occasion corresponds to one SSB beam.

In some possible embodiments, there are K WUS occasions in one wake up signal WUS cycle, and each WUS occasion is provided with a corresponding time-domain position at this wake up signal WUS cycle.

In an embodiment, the user device determines the WUS occasion corresponding to the user device according to a result of modeling K with the identification of the user device UE_ID.

In another embodiment, the user device determines a radio frame number SFN of the WUS occasion corresponding to the user device according to formula (1):

$$(SFN + WUS\_offset) \bmod T = (T \operatorname{div} K)*(UE\_ID \bmod K) \qquad (1)$$

T is a duration of the wake up signal WUS cycle, WUS_offset is a time-domain offset value related to the WUS signal configured by the network device, and UE_ID is the identification of the user device.

In some possible embodiments, each WUS occasion includes WUS monitoring occasions with a number being a product of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, a number of time-domain symbols included in the WUS monitoring occasion is determined based on a protocol agreement.

In some possible embodiments, a time-domain position of each WUS monitoring occasion in the WUS occasion is determined based on a protocol agreement.

In some possible embodiments, the WUS signals corresponding to the plurality of WUS monitoring occasions in the WUS occasion are identical.

In some possible embodiments, the WUS signals corresponding to the plurality of WUS monitoring occasions in the WUS occasion carry indexes of the SSB beams corresponding to the WUS monitoring occasions, respectively.

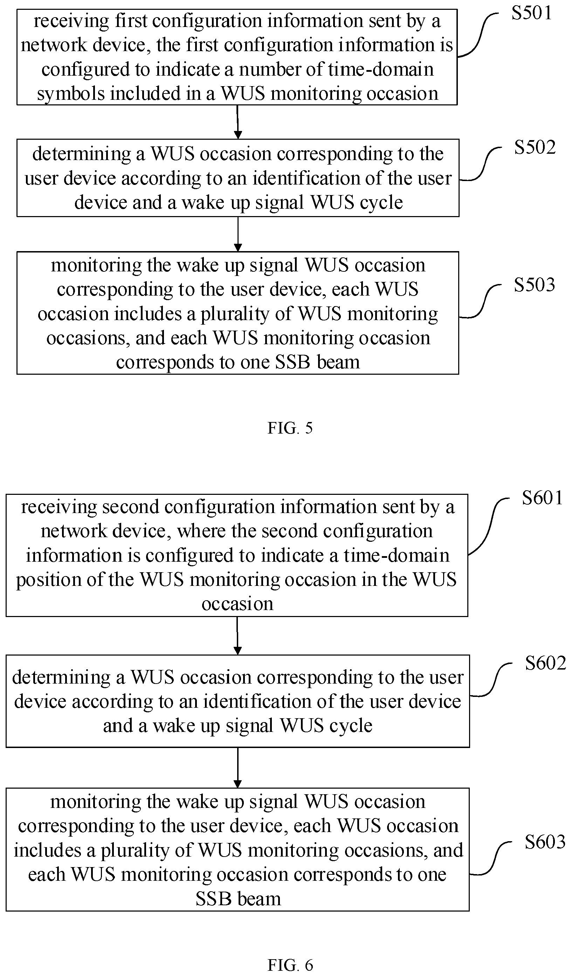

The embodiments of the present disclosure provide a method for monitoring a wake up signal, performed by a user device, and the method may be performed independently or in combination with any other embodiment of the embodiments of the present disclosure. FIG. 5 is a flowchart of monitoring a wake up signal according to an exemplary embodiment. As shown in FIG. 5, the method includes:

in step S501: first configuration information sent by a network device is received, the first configuration information is configured to indicate a number of time-domain symbols included in a WUS monitoring occasion;

in step S502: a WUS occasion corresponding to the user device is determined according to an identification of the user device and a wake up signal WUS cycle;

in step S503: the wake up signal WUS occasion corresponding to the user device is monitored, each WUS occasion includes a plurality of WUS monitoring occasions, and each WUS monitoring occasion corresponds to one SSB beam.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

For example, each WUS monitoring occasion includes 2 OFDM symbols configured to carry a wake up signal WUS sequence.

In some possible embodiments, each WUS occasion includes WUS monitoring occasions with a number being a produce of M and N, where M is a number of SSB beams performing data transmission, N is an integer greater than or equal to 1, and each SSB beam corresponds to N WUS monitoring occasions.

In some possible embodiments, the WUS signals corresponding to the plurality of WUS monitoring occasions in the WUS occasion are identical.

In some possible embodiments, the WUS signals corresponding to the plurality of WUS monitoring occasions in the WUS occasion carry indexes of the SSB beams corresponding to the WUS monitoring occasions, respectively.

The embodiments of the present disclosure provide a method for monitoring a wake up signal, performed by a user device, and the method may be performed independently or in combination with any other embodiment of the embodiments of the present disclosure. FIG. 6 is a flowchart of monitoring a wake up signal according to an exemplary embodiment. As shown in FIG. 6, the method includes:

in step S601: second configuration information sent by a network device is received, where the second configuration information is configured to indicate a time-domain position of the WUS monitoring occasion in the WUS occasion.

In an embodiment, the time-domain position of the WUS monitoring occasion in the WUS occasion includes a time-domain position interval between adjacent two WUS monitoring occasions, and a start position of a first WUS monitoring occasion in the WUS occasion.

In step S602: a WUS occasion corresponding to the user device is determined according to an identification of the user device and a wake up signal WUS cycle.

In step S603, the wake up signal WUS occasion corresponding to the user device is monitored, each WUS occasion includes a plurality of WUS monitoring occasions, and each WUS monitoring occasion corresponds to one SSB beam.

In some possible embodiments, a plurality of monitoring occasions are determined to be mapped from a first symbol of a first time slot of a radio frame corresponding to the WUS occasion according to a protocol agreement, with K symbols spaced between two WUS monitoring occasions, where K may be equal to 0 or may take other values.

In some possible embodiments, each WUS occasion includes WUS monitoring occasions with a number being a product of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, the WUS signals corresponding to the plurality of WUS monitoring occasions in the WUS occasion are identical.

In some possible embodiments, the WUS signals corresponding to the plurality of WUS monitoring occasions in the WUS occasion carry indexes of the SSB beams corresponding to the WUS monitoring occasions, respectively.

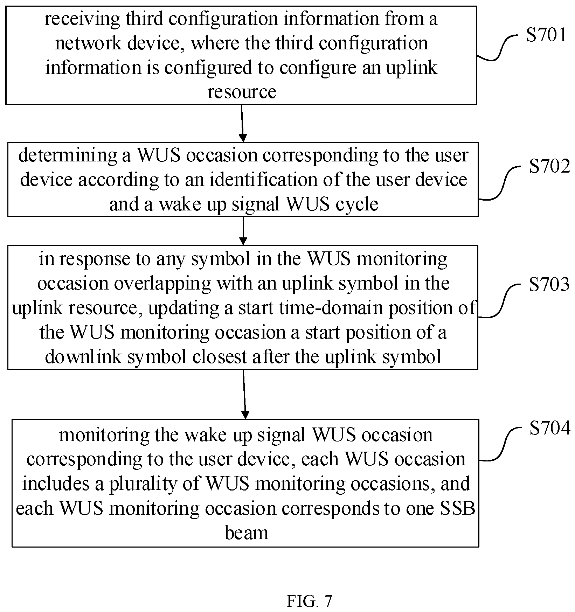

The embodiments of the present disclosure provide a method for monitoring a wake up signal, performed by a user device, and the method may be performed independently or in combination with any other embodiment of the embodiments of the present disclosure. FIG. 7 is a flowchart of monitoring a wake up signal according to an exemplary embodiment. As shown in FIG. 7, the method includes:

in step S701: third configuration information is received from a network device, where the third configuration information is configured to configure an uplink resource;

in step S702, a WUS occasion corresponding to the user device is determined according to an identification of the user device and a wake up signal WUS cycle;

in sep S702, in response to any symbol in the WUS monitoring occasion overlapping with an uplink symbol in the uplink resource, a start time-domain position of the WUS monitoring occasion is updated to a start position of a downlink symbol closest after the uplink symbol;

in step S703, the wake up signal WUS occasion corresponding to the user device is monitored, each WUS occasion includes a plurality of WUS monitoring occasions, and each WUS monitoring occasion corresponds to one SSB beam.

In some possible embodiments, each WUS occasion includes WUS monitoring occasions with a number being a produce of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, the WUS signals corresponding to the plurality of WUS monitoring occasions in the WUS occasion are identical.

In some possible embodiments, the WUS signals corresponding to the plurality of WUS monitoring occasions in the WUS occasion carry indexes of the SSB beams corresponding to the WUS monitoring occasions, respectively.

In the embodiments of the present disclosure, when any symbol in the WUS monitoring occasion overlaps with the uplink symbol in the uplink resource, in order to avoid the overlap, the start position of the WUS monitoring occasion is postponed to the closest downlink symbol.

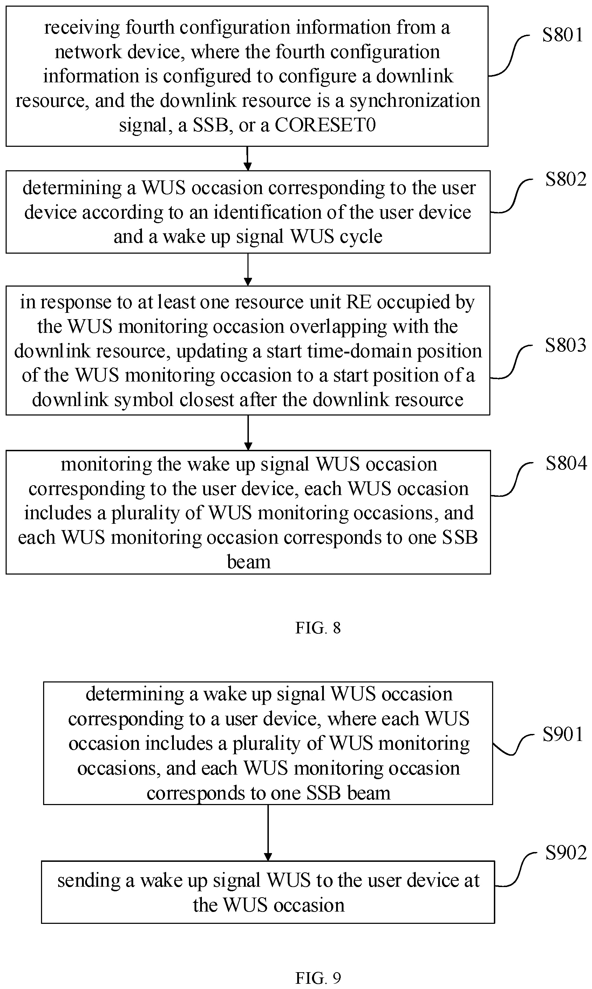

The embodiments of the present disclosure provide a method for monitoring a wake up signal, performed by a user device, and the method may be performed independently or in combination with any other embodiment of the embodiments of the present disclosure. FIG. 8 is a flowchart of monitoring a wake up signal according to an exemplary embodiment. As shown in FIG. 8, the method includes:

in step S801, fourth configuration information is received from a network device, where the fourth configuration information is configured to configure a downlink resource, and the downlink resource is a synchronization signal, a SSB, or a CORESET0;

in step S802, a WUS occasion corresponding to the user device is determined according to an identification of the user device and a wake up signal WUS cycle;

in step S803, in response to at least one resource unit RE occupied by the WUS monitoring occasion overlapping with the downlink resource, a start time-domain position of the WUS monitoring occasion is updated to a start position of a downlink symbol closest after the downlink resource;

in step S804: the wake up signal WUS occasion corresponding to the user device is monitored, each WUS occasion includes a plurality of WUS monitoring occasions, and each WUS monitoring occasion corresponds to one SSB beam.

In some possible embodiments, each WUS occasion includes WUS monitoring occasions with a number being a produce of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, the WUS signals corresponding to the plurality of WUS monitoring occasions in the WUS occasion are identical.

In some possible embodiments, the WUS signals corresponding to the plurality of WUS monitoring occasions in the WUS occasion carry indexes of the SSB beams corresponding to the WUS monitoring occasions, respectively.

In the embodiments of the present disclosure, when at least one resource unit RE occupied by the WUS monitoring occasion overlaps with the downlink resource, in order to avoid the overlap, the start position of the WUS monitoring occasion is postponed to the downlink symbol closest after the downlink resource.

The embodiments of the present disclosure provide a method for sending a wake up signal, performed by a network device, and the method may be performed independently or in combination with any other embodiment of the embodiments of the present disclosure. FIG. 9 is a flowchart of sending a wake up signal according to an exemplary embodiment. As shown in FIG. 9, the method includes:

in step S901, a wake up signal WUS occasion corresponding to a user device is determined, where each WUS occasion includes a plurality of WUS monitoring occasions, and each WUS monitoring occasion corresponds to one SSB beam;

in step S902, a wake up signal WUS is sent to the user device at the WUS occasion.

In some possible embodiments, each WUS occasion includes WUS monitoring occasions with a number being a product of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, the WUS signals corresponding to M WUS monitoring occasions in the WUS occasion are the identical.

In some possible embodiments, the WUS signals corresponding to M WUS monitoring occasions in the WUS occasion carry indexes of the SSB beams corresponding to the WUS monitoring occasions, respectively. In this way, the UE may distinguish a beam corresponding to the wake up signal through the wake up signal, and the WUS signal and PSS/SSS may be combined to support the WUS receiver to achieve a synchronization function.

In the embodiments of the present disclosure, under a multi-beam coverage network, each WUS monitoring occasion corresponds to one SSB beam, such that the user device may accurately monitor a monitoring occasion of the wake up signal.

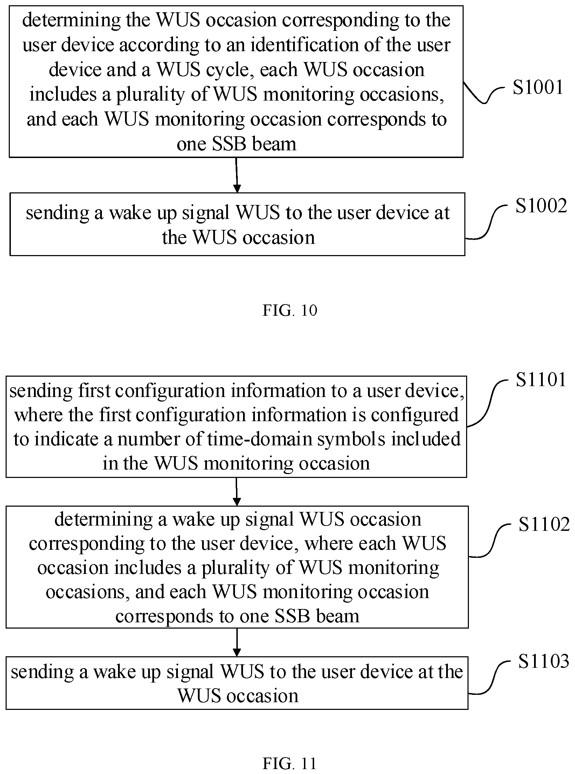

The embodiments of the present disclosure provide a method for sending a wake up signal, performed by a network device, and the method may be performed independently or in combination with any other embodiment of the embodiments of the present disclosure. FIG. 10 is a flowchart of sending a wake up signal according to an exemplary embodiment. As shown in FIG. 10, the method includes:

in step S1001: the WUS occasion corresponding to the user device is determined according to an identification of the user device and a WUS cycle, each WUS occasion includes a plurality of WUS monitoring occasions, and each WUS monitoring occasion corresponds to one SSB beam;
in step S1002, a wake up signal WUS is sent to the user device at the WUS occasion.

In some possible embodiments, there are K WUS occasions in one wake up signal WUS cycle, and each WUS occasion is provided with a corresponding time-domain position at this wake up signal WUS cycle.

In an embodiment, the network device determines the WUS occasion corresponding to the user device according to a result of modeling K with the identification of the user device UE_ID.

In another embodiment, the network device determines a radio frame number SFN of the WUS occasion corresponding to the user device according to formula (1):

$$(SFN + WUS\_offset) \bmod T = (T \operatorname{div} K)*(UE\_ID \bmod K) \qquad (1)$$

T is a duration of the wake up signal WUS cycle, WUS_offset is a time-domain offset value related to the WUS signal configured by the network device, and UE_ID is the identification of the user device.

In some possible embodiments, each WUS occasion includes WUS monitoring occasions with a number being a product of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, a number of time-domain symbols included in the WUS monitoring occasion is determined based on a protocol agreement.

In some possible embodiments, a time-domain position of each WUS monitoring occasion in the WUS occasion is determined based on a protocol agreement.

In some possible embodiments, the WUS signals corresponding to M WUS monitoring occasions in the WUS occasion are the identical.

In some possible embodiments, the WUS signals corresponding to M WUS monitoring occasions in the WUS occasion carry indexes of the SSB beams corresponding to the WUS monitoring occasions, respectively.

The embodiments of the present disclosure provide a method for sending a wake up signal, performed by a network device, and the method may be performed independently or in combination with any other embodiment of the embodiments of the present disclosure. FIG. 11 is a flowchart of sending a wake up signal according to an exemplary embodiment. As shown in FIG. 11, the method includes:

in step S1101, first configuration information is sent to a user device, where the first configuration information is configured to indicate a number of time-domain symbols included in the WUS monitoring occasion;
in step S1102, a wake up signal WUS occasion corresponding to the user device is determined, where each WUS occasion includes a plurality of WUS monitoring occasions, and each WUS monitoring occasion corresponds to one SSB beam;
in step S1103, a wake up signal WUS is sent to the user device at the WUS occasion.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

For example, each WUS monitoring occasion includes 2 OFDM symbols configured to carry a wake up signal WUS sequence.

In some possible embodiments, each WUS occasion includes WUS monitoring occasions with a number being a produce of M and N, where M is a number of SSB beams performing data transmission, N is an integer greater than or equal to 1, and each SSB beam corresponds to N WUS monitoring occasions.

In some possible embodiments, the WUS signals corresponding to M WUS monitoring occasions in the WUS occasion are the identical.

In some possible embodiments, the WUS signals corresponding to M WUS monitoring occasions in the WUS occasion carry indexes of the SSB beams corresponding to the WUS monitoring occasions, respectively.

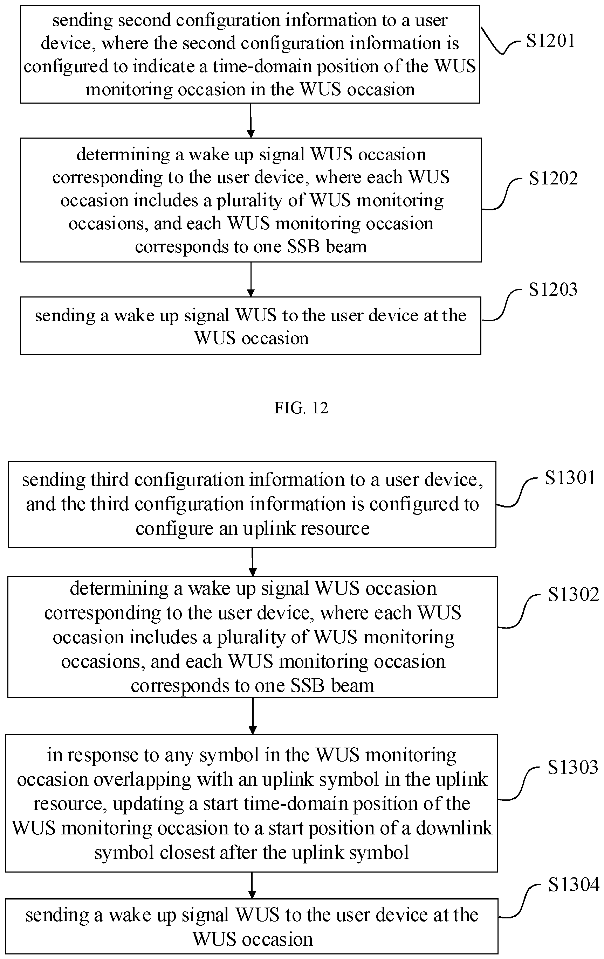

The embodiments of the present disclosure provide a method for sending a wake up signal, performed by a network device, and the method may be performed independently or in combination with any other embodiment of the embodiments of the present disclosure. FIG. 12 is a flowchart of sending a wake up signal according to an exemplary embodiment. As shown in FIG. 12, the method includes:

in step S1201: second configuration information is sent to a user device, where the second configuration information is configured to indicate a time-domain position of the WUS monitoring occasion in the WUS occasion;

In an embodiment, the time-domain position of the WUS monitoring occasion in the WUS occasion includes a time-domain position interval between adjacent two WUS monitoring occasions, and a start position of a first WUS monitoring occasion in the WUS occasion.

in step S1202: a wake up signal WUS occasion corresponding to the user device is determined, where each WUS occasion includes a plurality of WUS monitoring occasions, and each WUS monitoring occasion corresponds to one SSB beam;

in step S1203: a wake up signal WUS is sent to the user device at the WUS occasion.

In some possible embodiments, a plurality of monitoring occasions are determined to be mapped from a first symbol of a first time slot of a radio frame corresponding to the WUS occasion according to a protocol agreement, with K symbols spaced between two WUS monitoring occasions, where K may be equal to 0 or may take other values.

In some possible embodiments, each WUS occasion includes WUS monitoring occasions with a number being a product of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, the WUS signals corresponding to M WUS monitoring occasions in the WUS occasion are the identical.

In some possible embodiments, the WUS signals corresponding to M WUS monitoring occasions in the WUS occasion carry indexes of the SSB beams corresponding to the WUS monitoring occasions, respectively.

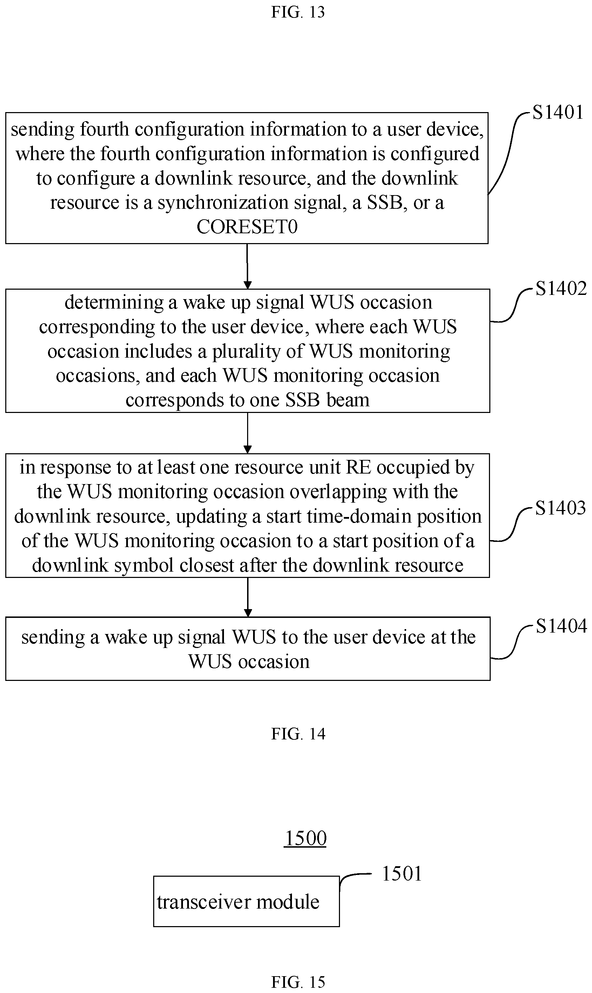

The embodiments of the present disclosure provide a method for sending a wake up signal, performed by a network device, and the method may be performed independently or in combination with any other embodiment of the embodiments of the present disclosure. FIG. 13 is a flowchart of sending a wake up signal according to an exemplary embodiment. As shown in FIG. 13, the method includes:

in step S1301: third configuration information is sent to a user device, and the third configuration information is configured to configure an uplink resource;

in step S1302, a wake up signal WUS occasion corresponding to the user device is determined, where each WUS occasion includes a plurality of WUS monitoring occasions, and each WUS monitoring occasion corresponds to one SSB beam;

in step S1303, in response to any symbol in the WUS monitoring occasion overlapping with an uplink symbol in the uplink resource, a start time-domain position of the WUS monitoring occasion is updated to a start position of a downlink symbol closest after the uplink symbol;

in step S1304, a wake up signal WUS is sent to the user device at the WUS occasion.

In some possible embodiments, each WUS occasion includes WUS monitoring occasions with a number being a product of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, the WUS signals corresponding to M WUS monitoring occasions in the WUS occasion are the identical.

In some possible embodiments, the WUS signals corresponding to M WUS monitoring occasions in the WUS occasion carry indexes of the SSB beams corresponding to the WUS monitoring occasions, respectively.

In the embodiments of the present disclosure, when any symbol in the WUS monitoring occasion overlaps with the uplink symbol in the uplink resource, in order to avoid the overlap, the start position of the WUS monitoring occasion is postponed to the closest downlink symbol.

The embodiments of the present disclosure provide a method for sending a wake up signal, performed by a network device, and the method may be performed independently or in combination with any other embodiment of the embodiments of the present disclosure. FIG. 14 is a flowchart of sending a wake up signal according to an exemplary embodiment. As shown in FIG. 14, the method includes:

in step 1401, fourth configuration information is sent to a user device, where the fourth configuration information is configured to configure a downlink resource, and the downlink resource is a synchronization signal, a SSB, or a CORESETO;

in step 1402: a wake up signal WUS occasion corresponding to the user device is determined, where each WUS occasion includes a plurality of WUS monitoring occasions, and each WUS monitoring occasion corresponds to one SSB beam;

in step 1403, in response to at least one resource unit RE occupied by the WUS monitoring occasion overlapping with the downlink resource, a start time-domain position of the WUS monitoring occasion is updated to a start position of a downlink symbol closest after the downlink resource;

in step 1404, a wake up signal WUS is sent to the user device at the WUS occasion.

In some possible embodiments, each WUS occasion includes WUS monitoring occasions with a number being a product of M and N, where M is a number of SSB beams performing data transmission, N is an integer greater than or equal to 1, and each SSB beam corresponds to N WUS monitoring occasions.

In some possible embodiments, the WUS monitoring occasion includes at least one time-domain symbol; a number of time-domain symbols included in each WUS monitoring occasion in the same WUS occasion is identical.

In an embodiment, a number of time-domain symbols included in each WUS monitoring occasion in each WUS occasion is identical.

In some possible embodiments, the WUS signals corresponding to M WUS monitoring occasions in the WUS occasion are the identical.

In some possible embodiments, the WUS signals corresponding to M WUS monitoring occasions in the WUS occasion carry indexes of the SSB beams corresponding to the WUS monitoring occasions, respectively.

In the embodiments of the present disclosure, when at least one resource unit RE occupied by the WUS monitoring occasion overlaps with the downlink resource, in order to avoid the overlap, the start position of the WUS monitoring occasion is postponed to the downlink symbol closest after the downlink resource.

Based on the same concept as the above method embodiments, embodiments of the present disclosure also provide a communication apparatus that may have a function of the user device 102 in the above method embodiments and be configured to perform steps provided by the user device 102 in the above method embodiments. The function may be implemented in a form of hardware, in a form of software or in a form of hardware executing corresponding software. The hardware or software includes one or more modules corresponding to the function described above.

In a possible embodiment, the communication apparatus 1500 shown in FIG. 15 may serve as the user device involved in the above method embodiments and perform the steps performed by the user device in the above method embodiments. As shown in FIG. 15, the communication apparatus 1500 may include a transceiver module 1501. The transceiver module 1501 may be configured to support the communication apparatus 1500 in performing communication, and the transceiver module 1501 may have a wireless communication function. For example, the transceiver module 1051 may wirelessly communicate with another communication apparatuses via a wireless radio.

When performing steps implemented by the user device 102, the transceiver module 1501 is configured to monitor a wake up signal WUS occasion corresponding to the user device, and each WUS occasion includes a plurality of WUS monitoring occasions, and each WUS monitoring occasion corresponds to one SSB beam.

In some possible embodiments, each WUS occasion includes WUS monitoring occasions with a number being a product of M and N, M is a number of SSB beams performing data transmission, N is an integer greater than or equal to 1, and each SSB beam corresponds to N WUS monitoring occasions.

In some possible embodiments, the transceiver module 1501 is further configured to:
determine the WUS occasion corresponding to the user device according to an identification of the user device and a wake up signal WUS cycle.

In some possible embodiments, the WUS monitoring occasion includes at least one time-domain symbol, and a number of time-domain symbols included in each WUS monitoring occasion in a same WUS occasion is identical.

In an embodiment, a number of time-domain symbols included in each WUS monitoring occasion in each WUS occasion is identical.

In some possible embodiments, the transceiver module 1501 is further configured to:

determine, based on a protocol agreement, a number of time-domain symbols included in the WUS monitoring occasion, or

receive first configuration information sent by a network device, where the first configuration information is configured to indicate a number of time-domain symbols included in the WUS monitoring occasion.

In some possible embodiments, the transceiver module 1501 is further configured to:

determine, based on a protocol agreement, a time-domain position of each WUS monitoring occasion in the WUS occasion, or

receive second configuration information sent by a network device, where the second configuration information is configured to indicate a time-domain position of the WUS monitoring occasion in the WUS occasion.

In some possible embodiments, the transceiver module 1501 is further configured to:

receive third configuration information from a network device, where the third configuration information is configured to configure an uplink resource;

update, in response to any symbol in the WUS monitoring occasion overlapping with an uplink symbol in the uplink resource, a start time-domain position of the WUS monitoring occasion to a start position of a downlink symbol closest after the uplink symbol.

In some possible embodiments, the transceiver module 1501 is further configured to:

receive fourth configuration information from a network device, where the fourth configuration information is configured to configure a downlink resource, and the downlink resource is a synchronization signal, a SSB, or a CORESET0;

in response to at least one resource unit RE occupied by the WUS monitoring occasion overlapping with the downlink resource, update a start time-domain position of the WUS monitoring occasion to a start position of a downlink symbol closest after the downlink resource.

In some possible embodiments, WUS signals corresponding to the plurality of WUS monitoring occasions in the WUS occasion are identical.

In some possible embodiments, WUS signals corresponding to the plurality of WUS monitoring occasions in the WUS occasion carry indexes of the SSB beams corresponding to the WUS monitoring occasions, respectively.

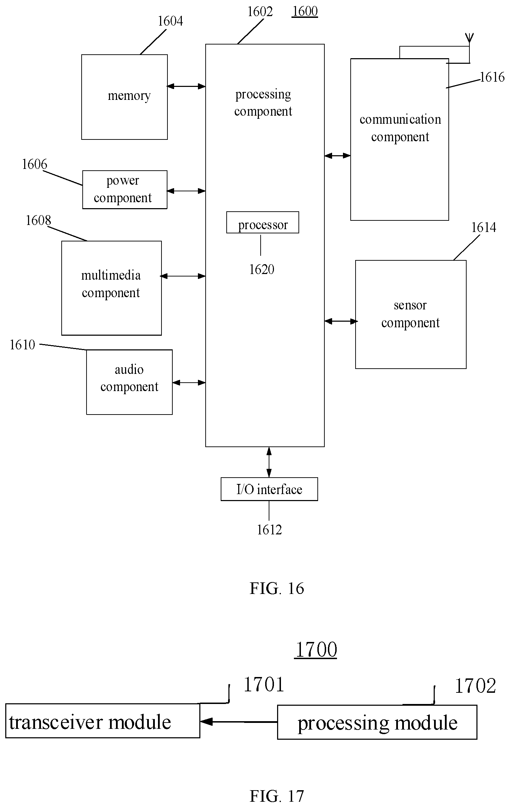

FIG. 16 is a block diagram of an apparatus 1600 for monitoring a wake up signal, according to an exemplary embodiment. For example, the apparatus 1600 may be a mobile phone, a computer, a digital broadcast terminal, a message transceiver, a game console, a tablet device, a medical device, fitness equipment, a personal digital assistant or the like.

Referring to FIG. 16, the apparatus 1600 may include one or more following components: a processing component 1602, a memory 1604, a power component 1606, a multimedia component 1608, an audio component 1610, an input/output (I/O) interface 1612, a sensor component 1614 and a communication component 1616.

The processing component 1602 typically controls overall operations of the apparatus 1600, such as the operations associated with display, telephone calls, data communications, camera operations and recording operations. The processing component 1602 may include one or more processors 1620 to execute instructions to perform all or part of the steps in the above described methods. Moreover, the processing component 1602 may include one or more modules which facilitate the interaction between the processing component 1602 and other components. For example, the processing component 1602 may include a multimedia module to facilitate the interaction between the multimedia component 1608 and the processing component 1602.

The memory 1604 is configured to store various types of data to support the operation of the apparatus 1600. Examples of such data include instructions for any applications or methods operated on the apparatus 1600, contact data, phonebook data, messages, pictures, video, etc. The memory 1604 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the apparatus 1600. The power component 1606 may include a power management system, one or more power sources, and any other components associated with the generation, management, and distribution of power in the apparatus 1600.

The multimedia component 1608 includes a screen providing an output interface between the apparatus 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes and gestures on the touch panel. The touch sensors may not only sense a boundary of a touch or swipe action, but also sense a period of time and a pressure associated with a touch or swipe action. In some embodiments, the multimedia component 1608 includes a front camera and/or a rear camera. The front camera and/or the rear camera may receive an external multimedia datum while the apparatus 1600 is in an operation mode, such as a photographing mode or a video mode. Each of the front and rear cameras may be a fixed optical lens system or have a focus and optical zoom capability.

The audio component 1610 is configured to output and/or input audio signals. For example, the audio component 1610 includes a microphone (MIC) configured to receive an external audio signal when the apparatus 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button. The buttons may include, but are not limited to, a home button, a volume button, a starting button, and a locking button.

The sensor component 1614 includes one or more sensors to provide status assessments of various aspects of the apparatus 1600. For instance, the sensor component 1614 may detect an open/closed status of the apparatus 1600, relative positioning of components, e.g., the display and the keypad, of the apparatus 1600, a change in position of the apparatus 1600 or a component of the apparatus 1600, a presence or absence of user's contact with the apparatus 1600, an orientation or an acceleration/deceleration of the apparatus 1600, and a change in temperature of the apparatus 1600. The sensor component 1614 may include a proximity sensor configured to detect the presence of nearby objects without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor or a temperature sensor.

The communication component 1616 is configured to facilitate communication, wired or wirelessly, between the apparatus 1600 and other devices. The apparatus 1600 may access a wireless network based on a communication standard, such as WiFi, 4G; or 5G; or a combination thereof. In an exemplary embodiment, the communication component 1616 receives a broadcast signal or broadcast associated information from an external broadcast management system via a broadcast channel. In an exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1604, executable by the processor 1620 in the apparatus 1600, for performing the above-described methods. For example, the non-transitory computer-readable storage medium may be a ROM, a RAM, a CD-ROM, a magnetic tape, a floppy disc, an optical data storage device, and the like.

Based on the same concept as the above method embodiments, embodiments of the present disclosure also provide a communication apparatus that may have a function of the network device 101 in the above method embodiments and be configured to perform steps provided by the network device 101 in the above method embodiments. The function may be implemented in a form of hardware, in a form of software or in a form of hardware executing corresponding software. The hardware or software includes one or more modules corresponding to the function described above.

In a possible embodiment, the communication apparatus 1700 shown in FIG. 17 may serve as the user device involved in the above method embodiments and perform the steps performed by the user device in the above method embodiments. As shown in FIG. 17, the communication apparatus 1700 may include a transceiver module 1701 and a processing module 1702 coupled to each other. The transceiver module 1701 may be configured to support the communication apparatus 1700 in performing communication, and the transceiver module 1701 may have a wireless communication function. For example, the transceiver module 1701 may wirelessly communicate with another communication apparatuses via a wireless radio. The processing module 1702 may be configured to support the communication apparatus 1700 in performing processing actions in the above method embodiments, which includes but is not limited to: generating information or a message sent by the transceiver module 1701, and/or demodulating and decoding a signal received by the transceiver module 1701, and the like.

When performing steps implemented by the user device 102, the processing module 1702 is configured to determine a wake up signal WUS occasion corresponding to a user device, where each WUS occasion includes a plurality of WUS monitoring occasions, and each WUS monitoring occasion corresponds to one SSB beam;

The transceiver module 1701 is configured to send the wake up signal WUS to the user device at the WUS occasion.

In some possible embodiments, each WUS occasion includes WUS monitoring occasions with a number being a product of M and N, M is a number of SSB beams performing data transmission, N is an integer greater than or equal to 1, and each SSB beam corresponds to N WUS monitoring occasions.

In some possible embodiments, the processing module 1702 is further configured to determine the WUS occasion corresponding to the user device according to an identification of the user device and a wake up signal WUS cycle.

In some possible embodiments, the WUS monitoring occasion includes at least one time-domain symbol, and a number of time-domain symbols included in each WUS monitoring occasion in a same WUS occasion is identical.

In some possible embodiments, the processing module 1702 is further configured to determine a number of time-domain symbols included in the WUS monitoring occasion based on a protocol agreement, or

send first configuration information to the user device, where the first configuration information is configured to indicate a number of time-domain symbols included in the WUS monitoring occasion.

In some possible embodiments, the processing module 1702 is further configured to determine a time-domain position of each WUS monitoring occasion in the WUS occasion based on a protocol agreement, or

send second configuration information to the user device, where the second configuration information is configured to indicate a time-domain position of the WUS monitoring occasion in the WUS occasion.

In some possible embodiments, the transceiver module 1701 is further configured to send third configuration information to the user device, where the third configuration information is configured to configure an uplink resource; the processing module 1702 is further configured to update a start time-domain position of the WUS monitoring occasion to a start position of a downlink symbol closest after the uplink symbol in response to any symbol in the WUS monitoring occasion overlapping with an uplink symbol in the uplink resource.

In some possible embodiments, the transceiver module 1701 is further configured to send fourth configuration information to the user device, where the fourth configuration information is configured to configure a downlink resource, and the downlink resource is a synchronization signal, a SSB, or a CORESETO;

The processing module 1702 is further configured to update a start time-domain position of the WUS monitoring occasion to a start position of a downlink symbol closest after the downlink resource in response to at least one resource unit RE occupied by the WUS monitoring occasion overlapping with the downlink resource.

In some possible embodiments, WUS signals corresponding to the plurality of WUS monitoring occasions in the WUS occasion are identical.

In some possible embodiments, WUS signals corresponding to the plurality of WUS monitoring occasions in the WUS occasion carry indexes of the SSB beams corresponding to the WUS monitoring occasions, respectively.

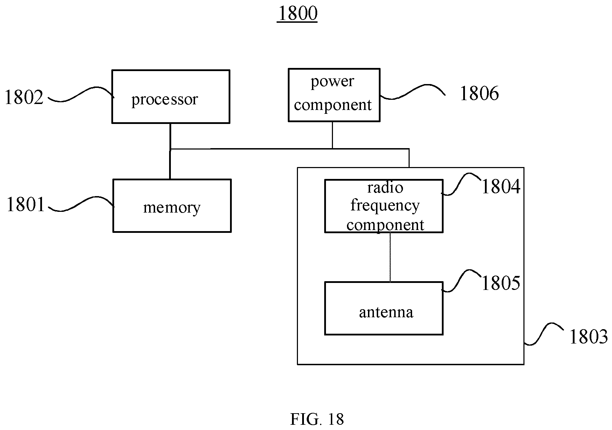

When the communication apparatus is a network device, its structure may also be illustrated in FIG. 18. The structure of the communication apparatus is illustrated by taking the network device 101 as a base station as an example. As illustrated in FIG. 18, the apparatus 1800 includes a memory 1801, a processor 1802, a transceiver component 1803, and a power component 1806. The memory 1801 is coupled with the processor 1802 and may be used to store a program and data necessary for the communication apparatus 1800 to implement functions. The processor 1802 is configured to support the communication apparatus 1800 to perform corresponding functions of the above methods, and the functions may be implemented by calling the program stored in the memory 1801. The transceiver component 1803 may be a wireless transceiver, which may be used to support the communication apparatus 1800 to receive and send signaling and/or data through a wireless radio interface. The transceiver component 1803 may also be called a transceiver unit or a communication unit. The transceiver component 1803 may include a radio frequency component 1804 and one or more antennas 1805. The radio frequency component 1804 may be a remote radio unit (RRU), which may be configured for transmitting radio frequency signals and conversing radio frequency signals and baseband signals. The one or more antennas 1805 may be configured for radiating and receiving radio frequency signals.

When the communication apparatus 1800 needs to send data, the processor 1802 may perform baseband processing on the data to be sent, and transmit baseband signals to the RRU. The RRU performs radio frequency processing on the baseband signals and sends the radio frequency signals in the form of electromagnetic waves through the antenna. When data is sent to the communication apparatus 1800, the RRU receives the radio frequency signals through the antenna, converts the radio frequency signals into the baseband signals, and sends the baseband signals to the processor 1802. The processor 1802 converts the baseband signals into data and processes the data.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It should be understood that the present disclosure is not limited to the exact construction that has been described above and illustrated in the accompanying drawings, and that various modifications and changes may be made without departing from the scope thereof. It is intended that the scope of the present disclosure only be limited by the appended claims.

## INDUSTRIAL APPLICABILITY

Under a multi-beam coverage network, each WUS monitoring occasion corresponds to one SSB beam, such that the user device may accurately monitor a monitoring occasion of the wake up signal.

## Claims

1. A method for monitoring a wake up signal, performed by a user device, comprising:
   monitoring a wake up signal WUS occasion corresponding to the user device, wherein each WUS occasion comprises a plurality of WUS monitoring occasions, and each WUS monitoring occasion corresponds to one SSB beam.

2. The method according to claim 1, wherein each WUS occasion comprises WUS monitoring occasions with a number being a product of M and N, M is a number of SSB beams performing data transmission, N is an integer greater than or equal to 1, and each SSB beam corresponds to N WUS monitoring occasions.

3. The method according to claim 1, further comprising:
   determining, according to an identification of the user device and a wake up signal WUS cycle, the WUS occasion corresponding to the user device.

4. The method according to claim 1, wherein the WUS monitoring occasion comprises at least one time-domain symbol, and a number of time-domain symbols comprised in each WUS monitoring occasion in a same WUS occasion is identical.

5. The method according to claim 1, further comprising:

   determining, based on a protocol agreement, a number of time-domain symbols comprised in the WUS monitoring occasion, or
   receiving first configuration information sent by a network device, wherein the first configuration information is configured to indicate a number of time-domain symbols comprised in the WUS monitoring occasion.

6. The method according to claim 1, further comprising:

   determining, based on a protocol agreement, a time-domain position of each WUS monitoring occasion in the WUS occasion, or
   receiving second configuration information sent by a network device, wherein the second configuration information is configured to indicate a time-domain position of the WUS monitoring occasion in the WUS occasion.

7. The method according to claim 1, further comprising:

   receiving third configuration information from a network device, wherein the third configuration information is configured to configure an uplink resource;
   updating, in response to any symbol in the WUS monitoring occasion overlapping with an uplink symbol in the uplink resource, a start time-domain position of the WUS monitoring occasion to a start position of a downlink symbol closest after the uplink symbol.

8. The method according to claim 1, further comprising:

   receiving fourth configuration information from a network device, wherein the fourth configuration information is configured to configure a downlink resource, and the downlink resource is a synchronization signal, a SSB, or a CORESET0;

updating, in response to at least one resource unit RE occupied by the WUS monitoring occasion overlapping with the downlink resource, a start time-domain position of the WUS monitoring occasion to a start position of a downlink symbol closest after the downlink resource.

9. The method according to claim 1, wherein WUS signals corresponding to the plurality of WUS monitoring occasions in the WUS occasion are identical.

10. The method according to claim 1, wherein WUS signals corresponding to the plurality of WUS monitoring occasions in the WUS occasion carry indexes of the SSB beams corresponding to the WUS monitoring occasions, respectively.

11. A method for sending a wake up signal, performed a network device, comprising:

determining a wake up signal WUS occasion corresponding to a user device, wherein each WUS occasion comprises a plurality of WUS monitoring occasions, and each WUS monitoring occasion corresponds to one SSB beam; and
sending a wake up signal WUS to the user device at the WUS occasion.

12. The method according to claim 11, wherein each WUS occasion comprises WUS monitoring occasions with a number being a product of M and N, M is a number of SSB beams performing data transmission, N is an integer greater than or equal to 1, and each SSB beam corresponds to N WUS monitoring occasions.

13. The method according to claim 11, further comprising:
determining, according to an identification of the user device and a wake up signal WUS cycle, the WUS occasion corresponding to the user device.

14. The method according to claim 11, wherein the WUS monitoring occasion comprises at least one time-domain symbol, and a number of time-domain symbols comprised in each WUS monitoring occasion in a same WUS occasion is identical.

15. The method according to claim 11, further comprising:

determining, based on a protocol agreement, a number of time-domain symbols comprised in the WUS monitoring occasion, or
sending first configuration information to the user device, wherein the first configuration information is configured to indicate a number of time-domain symbols comprised in the WUS monitoring occasion.

16. The method according to claim 11, further comprising:

determining, based on a protocol agreement, a time-domain position of each WUS monitoring occasion in the WUS occasion, or
sending second configuration information to the user device, wherein the second configuration information is configured to indicate a time-domain position of the WUS monitoring occasion in the WUS occasion.

17. The method according to claim 11, further comprising:

sending third configuration information to the user device, wherein the third configuration information is configured to configure an uplink resource; and
updating, in response to any symbol in the WUS monitoring occasion overlapping with an uplink symbol in the uplink resource, a start time-domain position of the WUS monitoring occasion to a start position of a downlink symbol closest after the uplink symbol.

18. The method according to claim 11, further comprising:

sending fourth configuration information to the user device, wherein the fourth configuration information is configured to configure a downlink resource, and the downlink resource is a synchronization signal, a SSB, or a CORESETO; and
updating, in response to at least one resource unit RE occupied by the WUS monitoring occasion overlapping with the downlink resource, a start time-domain position of the WUS monitoring occasion to a start position of a downlink symbol closest after the downlink resource.

19. The method according to claim 11, wherein WUS signals corresponding to the plurality of WUS monitoring occasions in the WUS occasion are identical.

20. The method according to claim 11, wherein WUS signals corresponding to the plurality of WUS monitoring occasions in the WUS occasion carry indexes of the SSB beams corresponding to the WUS monitoring occasions, respectively.

21. An apparatus for monitoring a wake up signal, configured on a user device, comprising:
    a transceiver module, configured to monitor a wake up signal WUS occasion corresponding to the user device, wherein each WUS occasion comprises a plurality of WUS monitoring occasions, and each WUS monitoring occasion corresponds to one SSB beam.

22. An apparatus for monitoring wake up signals, configured on a network device, comprising:

    a processing module, configured to determine a wake up signal WUS occasion corresponding to a user device, wherein each WUS occasion comprises a plurality of WUS monitoring occasions, and each WUS monitoring occasion corresponds to one SSB beam; and
    a transceiver module, configured to send the wake up signal WUS to the user device at the WUS occasion.

23. A communication apparatus comprising a processor and a memory, wherein

    the memory is configured to store a computer program; and
    the processor is configured to execute the computer program to implement the method according to any one of claims 1-10.

24. A communication apparatus comprising a processor and a memory, wherein

    the memory is configured to store a computer program; and
    the processor is configured to execute the computer program to implement the method according to any one of claims 11-20.

25. A computer-readable storage medium, storing instructions, wherein when the instructions are invoked and executed on a computer, the computer is enabled to perform the method according to any one of claims 1 to 10.

26. A computer-readable storage medium, storing instructions, wherein when the instructions are invoked and executed on a computer, the computer is enabled to perform the method according to any one of claims 11 to 20.

## Wireless Communication System 100

101

downlink

102

uplink

FIG. 1

| network device 101 | user device 102 |
|---|---|

S201, determining a WUS occasion corresponding to the user device 102, each WUS occasion includes a plurality of WUS monitoring occasions, and each WUS monitoring occasion corresponds to one SSB beam

S201, determining a WUS occasion corresponding to the user device 102, each WUS occasion includes a plurality of WUS monitoring occasions, and each WUS monitoring occasion corresponds to one SSB beam

S202, sending a wake up signal to the user device 102 at the WUS occasion

S203, monitoring the wake up signal WUS occasion corresponding to the user device

FIG. 2

monitoring a wake up signal WUS occasion corresponding to the user device, where each WUS occasion includes a plurality of WUS monitoring occasions, and each WUS monitoring occasion corresponds to one SSB beam

S301

FIG. 3

determining a WUS occasion corresponding to the user device according to an identification of the user device and a wake up signal WUS cycle

S401

monitoring the wake up signal WUS occasion corresponding to the user device, each WUS occasion includes a plurality of WUS monitoring occasions, and each WUS monitoring occasion corresponds to one SSB beam

S402

FIG. 4

receiving first configuration information sent by a network device, the first configuration information is configured to indicate a number of time-domain symbols included in a WUS monitoring occasion — S501

determining a WUS occasion corresponding to the user device according to an identification of the user device and a wake up signal WUS cycle — S502

monitoring the wake up signal WUS occasion corresponding to the user device, each WUS occasion includes a plurality of WUS monitoring occasions, and each WUS monitoring occasion corresponds to one SSB beam — S503

FIG. 5

receiving second configuration information sent by a network device, where the second configuration information is configured to indicate a time-domain position of the WUS monitoring occasion in the WUS occasion — S601

determining a WUS occasion corresponding to the user device according to an identification of the user device and a wake up signal WUS cycle — S602

monitoring the wake up signal WUS occasion corresponding to the user device, each WUS occasion includes a plurality of WUS monitoring occasions, and each WUS monitoring occasion corresponds to one SSB beam — S603

FIG. 6

receiving third configuration information from a network device, where the third configuration information is configured to configure an uplink resource — S701

determining a WUS occasion corresponding to the user device according to an identification of the user device and a wake up signal WUS cycle — S702

in response to any symbol in the WUS monitoring occasion overlapping with an uplink symbol in the uplink resource, updating a start time-domain position of the WUS monitoring occasion a start position of a downlink symbol closest after the uplink symbol — S703

monitoring the wake up signal WUS occasion corresponding to the user device, each WUS occasion includes a plurality of WUS monitoring occasions, and each WUS monitoring occasion corresponds to one SSB beam — S704

FIG. 7

receiving fourth configuration information from a network device, where the fourth configuration information is configured to configure a downlink resource, and the downlink resource is a synchronization signal, a SSB, or a CORESET0  — S801

determining a WUS occasion corresponding to the user device according to an identification of the user device and a wake up signal WUS cycle  — S802

in response to at least one resource unit RE occupied by the WUS monitoring occasion overlapping with the downlink resource, updating a start time-domain position of the WUS monitoring occasion to a start position of a downlink symbol closest after the downlink resource  — S803

monitoring the wake up signal WUS occasion corresponding to the user device, each WUS occasion includes a plurality of WUS monitoring occasions, and each WUS monitoring occasion corresponds to one SSB beam  — S804

FIG. 8

determining a wake up signal WUS occasion corresponding to a user device, where each WUS occasion includes a plurality of WUS monitoring occasions, and each WUS monitoring occasion corresponds to one SSB beam  — S901

sending a wake up signal WUS to the user device at the WUS occasion  — S902

FIG. 9

determining the WUS occasion corresponding to the user device according to an identification of the user device and a WUS cycle, each WUS occasion includes a plurality of WUS monitoring occasions, and each WUS monitoring occasion corresponds to one SSB beam

S1001

sending a wake up signal WUS to the user device at the WUS occasion

S1002

FIG. 10

sending first configuration information to a user device, where the first configuration information is configured to indicate a number of time-domain symbols included in the WUS monitoring occasion

S1101

determining a wake up signal WUS occasion corresponding to the user device, where each WUS occasion includes a plurality of WUS monitoring occasions, and each WUS monitoring occasion corresponds to one SSB beam

S1102

sending a wake up signal WUS to the user device at the WUS occasion

S1103

FIG. 11

sending second configuration information to a user device, where the second configuration information is configured to indicate a time-domain position of the WUS monitoring occasion in the WUS occasion — S1201

determining a wake up signal WUS occasion corresponding to the user device, where each WUS occasion includes a plurality of WUS monitoring occasions, and each WUS monitoring occasion corresponds to one SSB beam — S1202

sending a wake up signal WUS to the user device at the WUS occasion — S1203

FIG. 12

sending third configuration information to a user device, and the third configuration information is configured to configure an uplink resource — S1301

determining a wake up signal WUS occasion corresponding to the user device, where each WUS occasion includes a plurality of WUS monitoring occasions, and each WUS monitoring occasion corresponds to one SSB beam — S1302

in response to any symbol in the WUS monitoring occasion overlapping with an uplink symbol in the uplink resource, updating a start time-domain position of the WUS monitoring occasion to a start position of a downlink symbol closest after the uplink symbol — S1303

sending a wake up signal WUS to the user device at the WUS occasion — S1304

FIG. 13

FIG. 14

```
┌─────────────────────────────────────────┐     S1401
│ sending fourth configuration information │
│ to a user device, where the fourth       │
│ configuration information is configured   │
│ to configure a downlink resource, and     │
│ the downlink resource is a synchronization│
│ signal, a SSB, or a CORESET0              │
└─────────────────────────────────────────┘
                    │
                    ▼
┌─────────────────────────────────────────┐     S1402
│ determining a wake up signal WUS occasion │
│ corresponding to the user device, where   │
│ each WUS occasion includes a plurality of │
│ WUS monitoring occasions, and each WUS    │
│ monitoring occasion corresponds to one    │
│ SSB beam                                  │
└─────────────────────────────────────────┘
                    │
                    ▼
┌─────────────────────────────────────────┐     S1403
│ in response to at least one resource unit │
│ RE occupied by the WUS monitoring occasion│
│ overlapping with the downlink resource,    │
│ updating a start time-domain position of   │
│ the WUS monitoring occasion to a start     │
│ position of a downlink symbol closest after│
│ the downlink resource                     │
└─────────────────────────────────────────┘
                    │
                    ▼
┌─────────────────────────────────────────┐     S1404
│ sending a wake up signal WUS to the user  │
│ device at the WUS occasion                │
└─────────────────────────────────────────┘
```

1500

```
┌─────────────────────┐   1501
│ transceiver module  │
└─────────────────────┘
```

FIG. 15

1604

1602    1600

memory

processing
component

communication
component

1616

1606

power
component

processor

1608

1620

multimedia
component

sensor
component

1614

1610

audio
component

I/O interface

1612

FIG. 16

1700

1701

1702

transceiver module

processing module

FIG. 17

<u>1800</u>

FIG. 18

## INTERNATIONAL SEARCH REPORT

International application No.

**PCT/CN2022/082876**

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT, ENTXT, 3GPP: 唤醒信号, 唤醒, 同步信号快, 监听, 时机, WUS, wak+ up, SSB, listen+, monito+, occasion?, opportunit+

### C. DOCUMENTS CONSIDERED TO BE RELEVANT

| Category* | Citation of document, with indication, where appropriate, of the relevant passages | Relevant to claim No. |
|---|---|---|
| X | WO 2021097792 A1 (LENOVO BEIJING LTD.) 27 May 2021 (2021-05-27) description, paragraphs 0065-0135, and figures 12-13 | 1-26 |
| X | CN 114080008 A (DATANG MOBILE COMMUNICATIONS EQUIPMENT CO., LTD.) 22 February 2022 (2022-02-22) description, paragraphs 0121-0140 | 1-26 |
| X | WO 2021114008 A1 (QUALCOMM INC. et al.) 17 June 2021 (2021-06-17) description, paragraphs 0066-0094 | 1-26 |

☐ Further documents are listed in the continuation of Box C.　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 November 2022** | **22 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/082876**

| Patent document cited in search report | | | Publication date (day/month/year) | Patent family member(s) | | | Publication date (day/month/year) |
|---|---|---|---|---|---|---|---|
| WO | 2021097792 | A1 | 27 May 2021 | EP | 4062677 | A1 | 28 September 2022 |
| | | | | CN | 114731579 | A | 08 July 2022 |
| CN | 114080008 | A | 22 February 2022 | None | | | |
| WO | 2021114008 | A1 | 17 June 2021 | None | | | |

Form PCT/ISA/210 (patent family annex) (January 2015)